# EUROPÄISCHE PATENTSCHRIFT

(11) **EP 3 027 927 B1**
(45) Veröffentlichungstag und Bekanntmachung des Hinweises auf die Patenterteilung: **31.10.2018**
(21) Anmeldenummer: 14731979.2
(22) Anmeldetag: 24.06.2014
(51) Int. Cl.: F16D 65/12, F16D 65/092

(54) **REIBRINGKÖRPER FÜR EINE SCHIENENRADBREMSE UND SCHIENENRADBREMSE**
FRICTION RING BODY FOR A RAIL WHEEL BRAKE AND RAIL WHEEL BRAKE
CORPS DE BAGUE DE FRICTION POUR UN FREIN DE ROUE FERROVIAIRE ET FREIN DE ROUE FERROVIAIRES

(30) Priorität: 02.08.2013 DE 202013103487 U
(43) Veröffentlichungstag der Anmeldung: 08.06.2016
(73) Patentinhaber: Faiveley Transport Witten GmbH, 58454 Witten (DE)
(72) Erfinder: KRAUSE, Henrik, 44225 Dortmund (DE); WURTH, Sebastian, 51688 Wipperfürth (DE); MEHLAN, Andreas, 59425 Unna (DE)
(74) Vertreter: RGTH
(86) Internationale Anmeldenummer: PCT/EP2014/063291
(87) Internationale Veröffentlichungsnummer: WO 2015/014542

(56) Entgegenhaltungen:
- EP-A1- 1 460 283
- DE-A1- 4 417 813
- DE-U1-202009 014 768

## Beschreibung

Die vorliegende Erfindung betrifft einen Reibringkörper zur Anordnung an den Radsteg eines Schienenrades für ein Schienenfahrzeug zur Bildung einer Schienenradbremse und sie betrifft auch eine solche Schienenradbremse.

### Stand der Technik

Die EP 1460 283 A1 zeigt beispielsweise Reibringkörper in Anordnung an dem Radsteg eines Schienenrades für ein Schienenfahrzeug zur Bildung einer Schienenradbremse. Die Reibringkörper sind aus Stahlguss hergestellt und weisen Anformungen auf, mit denen die Reibringkörper an der Oberfläche des Radsteges anliegen. Die Anformungen dienen ferner zur Aufnahme von Durchgangsschrauben, um die Reibringkörper unter Hindurchführung der Durchgangsschrauben durch Bohrungen im Radsteg gegeneinander zu verschrauben. Die gezeigte Geometrie der Reibringkörper ist dabei nur mit einem relativ aufwendigen Urformverfahren technisch sinnvoll herstellbar.

Weitere Reibringkörper zur Anordnung an den Radsteg eines Schienenrades sind in der EP 1 298 333 B1 und in der DE 44 17 813 A1 gezeigt. Die gusstechnische Herstellung solcher Reibringkörper erfordert technisch aufwendige Gießformen, insbesondere dann, wenn die Reibringkörper Anformungen aufweisen, mit denen diese an den Radsteg des Schienenrades anliegen und wenn die Reibringkörper beispielsweise Kühlrippen aufweisen müssen, um die Reibringe zu kühlen.

### Darstellung der Erfindung: Aufgabe, Lösung, Vorteile

Als Aufgabe der Erfindung ergibt sich damit eine Weiterbildung von Reibringkörpern zur Anordnung an den Radsteg eines Schienenrades zur Bildung einer Schienenradbremse, die einfach herstellbar sein sollen. Insbesondere sollen die Reibringkörper auf einfache Weise mit Anbindungskörpern ausgestattet werden können, wobei die Anbindungskörper insbesondere Kühlkörper und/oder Verbindungskörper bilden sollen, über die die Reibringe an den Radsteg angebunden werden können.

Diese Aufgabe wird ausgehend von einem Reibringkörper gemäß dem Oberbegriff des Anspruchs 1 sowie ausgehend von einer Schienenradbremse gemäß dem Oberbegriff des Anspruches 11 mit den jeweils kennzeichnenden Merkmalen gelöst. Vorteilhafte Weiterbildungen der Erfindung sind in den abhängigen Ansprüchen angegeben.

Die Erfindung schließt die technische Lehre ein, dass der Reibringkörper einen aus einem Flachmetallmaterial ausgeschnittenen Reibring und mehrere mittels einer stoffschlüssigen Verbindungstechnik an den Reibring angeordnete Anbindungskörper aufweist.

Die Erfindung schlägt damit Reibringkörper vor, die in einem zweidimensionalen Fertigungsverfahren hergestellt werden können, sodass die Bereitstellung eines Flachmetallmaterials, beispielsweise ein Flachstahlmaterial oder ein Flachaluminiummaterial, bereits ausreichend ist, um die Reibringkörper mit der geforderten Kontur aus dem Flachmetallmaterial zweidimensional auszuschneiden. Die Schnittverfahren zum Ausschneiden der Reibringkörper aus einem Flachmetallmaterial, das beispielsweise als Meterware oder als Endlosware bereitgestellt werden kann, können bekannte Verfahren wie ein Laserstrahlschneiden, ein Wasserstrahlschneiden, ein thermisches Trennschneiden oder ein Scherschnittverfahren betreffen. Auf diese Weise können die Reibringkörper erfindungsgemäß ohne die Anwendung eines Gießverfahrens auf einfachste Weise bereitgestellt werden, wobei die Reibringkörper und die Schnittflächen, also zumindest die Außenkontur und die Innenkontur, gegebenenfalls mechanisch nachbearbeitet werden können. Dabei ist es von entscheidendem Vorteil, dass die Anbindungskörper als Einzelteile zur Verfügung gestellt werden können, und die Anbindungskörper werden mittels einer stoffschlüssigen Verbindungstechnik an den Reibring angeordnet.

Die Anbindungskörper können verschiedenartig ausgeführt sein und unterschiedliche Funktionen erfüllen. Beispielsweise können die Anbindungskörper Kühlkörper bilden, durch die bei Anordnung des Reibringkörpers an den Radsteg ein Kühlluftstrom zwischen dem Reibring und dem Radsteg ausgebildet werden kann. Ferner können die Anbindungskörper Verbindungskörper bilden, über die der Reibring an den Radsteg angebunden ist. Dabei können auch die Verbindungskörper eine Kühlfunktion erfüllen. Somit können Anbindungskörper vorgesehen sein, die als Kühlkörper lediglich an der Oberfläche des Reibringes angeordnet sind und einen Abstand zur Oberfläche des Radsteges aufweisen. Die Verbindungskörper hingegen erstrecken sich dabei von der Oberfläche des Reibringes bis an die Oberfläche des Radsteges. Die Kühlkörper können lamellenartig, mit einer Rechteckform, einer Halbkreisform, einer Trapezform oder der jeder weiteren vorteilhaften Form ausgestaltet sein, und bilden die Kühlkörper flache, lamellenartige Körper aus, können diese vorzugsweise in radialer Richtung sich fächerartig erstreckend an der Innenseite des Reibringes angeordnet sein.

Mit besonderem Vorteil kann die stoffschlüssige Verbindung zwischen den Anbindungskörpern und dem Reibring durch eine Lötverbindung oder durch eine Schweißverbindung gebildet sein. Die Anbindungskörper können, wie auch die Reibringe, aus einem Flachmetallmaterial, insbesondere aus einem Flachstahlmaterial oder aus einem Flachaluminiummaterial, ausgeschnitten sein. Folglich wird erfindungsgemäß der Reibringkörper mit seinen wesentlichen Bestandteilen, nämlich den Reibringen und den Anbindungskörpern, aus Flachmetallmaterialen ausgeschnitten, wodurch erfindungsgemäß eine besonders einfache und kostengünstige Herstellungsmöglichkeit umgesetzt wird. Dabei müssen die Anbindungskörper nicht zwingend eine flächige Erstreckung aufweisen, die größer ist als die Dicke der Anbindungskörper. Die Anbindungskörper können würfel-, klötzchen-, zylinder-, trapez- oder pyramidenstumpfartig oder dergleichen ausgeführt sein, wobei die Berandung der Anbindungskörper vorzugsweise im Schnittverfahren hergestellt ist. Die Anbindungskörper werden dabei an die Oberfläche des Reibringkörpers und gegebenenfalls an die Oberfläche des Radsteges des Schienenrades mit der Oberfläche angebracht, die die Oberfläche des Flachmetallmaterials bildet. Die geschnittenen Oberflächen, die gegebenenfalls schlechtere Maßgenauigkeiten und Oberflächenqualitäten aufweisen, können als Freiflächen dienen, wobei auch die Freiflächen zur Erhöhung der Oberflächenqualität nachbearbeitet sein können.

Der Reibring und/oder die Anbindungskörper können beispielsweise mittels eines Laserstrahlschneidverfahrens, eines Wasserstrahlschneidverfahrens oder eines thermischen Trennverfahrens aus einem Blechmaterial ausgeschnitten werden. Grundsätzlich ist es auch denkbar, den Reibring und/oder die Anbindungskörper im Scherschnittverfahren herzustellen. Ein weiterer wesentlicher Vorteil entsteht dadurch, dass zur Bereitstellung der Reibringe und zur Bereitstellung der Anbindungskörper unterschiedliche Materialien herangezogen werden können. So kann das Flachmetallmaterial für die Reibringe beispielsweise ein verschleißoptimierter Werkstoff sein, wohingegen das Flachmetallmaterial zur Bildung der Anbindungskörper besonders preiswerter ausfallen kann. Zudem können Vorteile genutzt werden, die sich durch die Verwendung eines gewalzten Flachmetallmaterials ergeben, das beispielsweise durch den Walzvorgang in seiner Herstellung bereits hoch verdichtet ist und damit eine höhere Kaltverfestigung aufweist als diese bei Gießwerkstoffen überhaupt erreichbar ist.

Nach einer weiteren vorteilhaften Ausführungsform des Reibringkörpers können die Anbindungskörper auf einer planen Oberfläche des Reibringes aufgesetzt werden, oder es ist vorgesehen, dass die Anbindungskörper in Vertiefungen oder in Löcher im Reibring wenigstens teilweise hineingeführt sind. Die Anbindungskörper bilden dabei vorzugsweise Verbindungskörper, wobei dann, wenn die Verbindungskörper in Vertiefungen oder in Löcher eingesetzt sind, kann eine stoffschlüssige Verbindung zwischen dem Anbindungskörper und dem Reibring gegebenenfalls entfallen, da durch das Einsetzen des Anbindungskörpers in das Loch bereits ein Formschluss erzeugt wird.

Die Anbindungskörper können eine vorzugsweise tangentiale, kanalförmige Aussparung aufweisen, die mittels Luftströmung eine Konvektionskühlung des Anbindungskörpers ermöglicht, da die Anbindungskörper in einem Lüftungsspalt zwischen dem Reibring und dem Radsteg angeordnet sind. Die Anbindungskörper mit der tangentialen, kanalförmigen Aussparung können dabei vorzugsweise die Verbindungskörper bilden.

Auch kann vorgesehen sein, dass die Anbindungskörper eine Aussparung mit radial verlaufenden, insbesondere planparallelen Seitenflächen aufweisen. Hierfür können Führungselemente vorgesehen sein, die vorzugsweise mittels Spannhülsen am Schienenrad formschlüssig gehalten sind und die in den radialen Aussparungen der Anbindungskörper gleitend geführt sind. Damit entsteht eine formschlüssige Verbindung zwischen dem Radsteg und dem Reibring, indem ein erster Formschluss zwischen dem Führungselement und dem Radsteg durch die Spannhülse gebildet ist, und der weitere Formschluss entsteht durch die geführte Aufnahme des Führungselementes in der radial verlaufenden Aussparung im Anbindungskörper. Der Anbindungskörper selbst kann dabei wiederum formschlüssig in einem Loch oder in einer Vertiefung im Reibring eingebracht sein. Der besondere Vorteil der Führung der Führungselemente im Anbindungskörper in radialer Richtung liegt darin, dass kleine Bewegungen durch Wärmedehnungen im Reibring ermöglicht werden, ohne dass es zu übermäßigen Verspannungen des Reibringes in Anordnung am Radsteg kommt.

Die Aufgabe der vorliegenden Erfindung wird ebenfalls gelöst durch eine Schienenradbremse mit einem Schienenrad, aufweisend eine Radnabe und einen Radkranz mit einer Lauffläche, wobei sich zwischen der Radnabe und dem Radkranz ein Radsteg erstreckt, und wobei an beiden Seiten des Radsteges Reibringkörper am Radsteg angeordnet sind. Dabei ist vorgesehen, dass die Reibringkörper jeweils einen aus einem Flachmetallmaterial ausgeschnittenen Reibring und mehrere mittels einer stoffschlüssigen Verbindungstechnik an den Reibring angeordnete Anbindungskörper aufweisen.

Zur Verbindung der Reibringe mit dem Radsteg können Schraubelemente vorgesehen sein, und mit den Schraubelementen können die Reibringe auf beiden Seiten des Radsteges miteinander verspannt werden. Dabei können sich die Verbindungskörper im Spannverband mit den Schraubelementen und den Reibringen befinden. Die Schraubelemente werden damit als Zuganker genutzt, wobei die Schraubelemente Schraubenköpfe und Schraubenmuttern aufweisen können, die formschlüssig in den Verbindungskörpern einsitzen können und ein Schraubenschaft erstreckt sich durch ein Loch hindurch das im Radsteg eingebracht ist. Damit befinden sich die Schraubenköpfe und/oder die Schraubenmuttern unterhalb der Reiboberfläche der Reibringe, auf denen die Bremsklötze der Schienenradbremse ungehindert abgleiten können.

Weiterhin kann vorgesehen sein, dass die Schraubelemente durch die Spannhülsen hindurchgeführt sind, und die Schraubelemente können einen Schraubenschaft aufweisen, der im Durchtrittsbereich durch die Spannhülse einen kleineren Durchmesser aufweist als der Innendurchmesser der Spannhülse. Damit wird eine geringfügige Bewegung der Schraubelemente in beispielsweise radialer Richtung oder in Umfangsrichtung innerhalb der Spannhülse ermöglicht, beispielsweise bei einer Wärmedehnung der Reibringe. Folglich führt eine Ausdehnung der Reibringe, die einen Durchmesserzuwachs und damit einen Drift der Schraubelemente innerhalb der Spannhülse erzeugt, nicht zu einer übermäßigen Verspannung. Beispielsweise kann zum Ausgleich der Wärmedehnung der Reibringe eine Bewegung der Schraubelemente innerhalb der Spannhülsen in radialer Richtung stattfinden.

### Kurze Beschreibung der Zeichnungen

Weitere, die Erfindung verbessernde Maßnahmen werden nachstehend gemeinsam mit der Beschreibung bevorzugter Ausführungsbeispiele der Erfindung anhand der Figuren näher dargestellt. Es zeigen:
Figur 1 eine quergeschnittene Ansicht durch die obere Hälfte einer Schienenradbremse mit einem Schienenrad, und am Schienenrad sind beidseitig Reibringkörper angeordnet, die mit den Merkmalen der vorliegenden Erfindung ausgestaltet sind,
Figur 2 eine fliegende Ansicht der Schienenradbremse in einer nicht montierten Anordnung,
Figur 3a eine Querschnittsansicht einer Schienenradbremse mit Anbindungskörpern, die gemäß einer ersten Ausführungsform am Reibring angeordnet sind,
Figur 3b eine Querschnittsansicht einer Schienenradbremse mit Anbindungskörpern, die gemäß einer zweiten Ausführungsform am Reibring angeordnet sind,
Figur 3c eine Querschnittsansicht einer Schienenradbremse mit Anbindungskörpern, die gemäß einer dritten Ausführungsform am Reibring angeordnet sind,
Figur 4 eine perspektivische Ansicht eines Verbindungskörpers und
Figur 5 eine perspektivische Ansicht eines Führungselementes.

### Bevorzugte Ausführungsformen der Erfindung

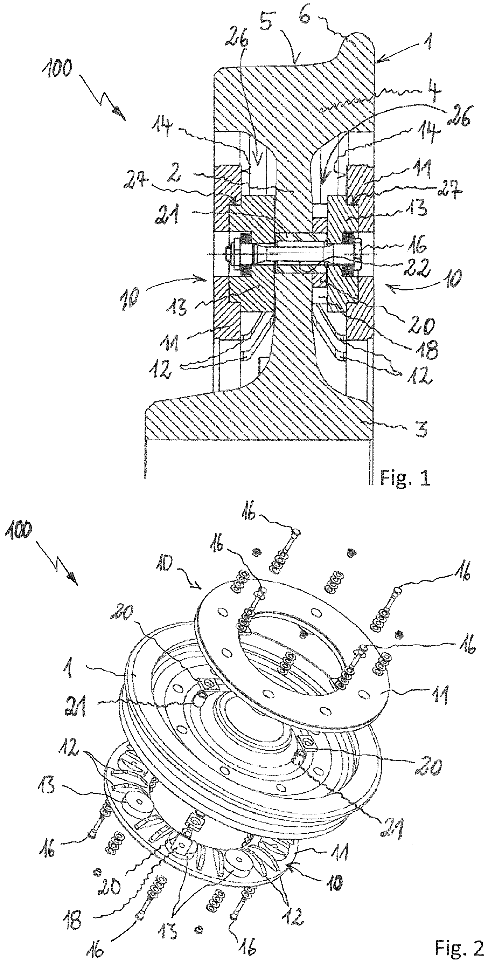

Figur 1 zeigt ein Ausführungsbeispiel einer Schienenradbremse 100 mit einem Schienenrad 1, und am Schienenrad 1 sind erfindungsgemäß ausgestaltete Reibringkörper 10 angeordnet. Die Schienenradbremse 1 weist einen Radsteg 2 auf, der sich zwischen einer Radnabe 3 und einem Radkranz 4 etwa tellerförmig in einer Radialebene erstreckt, und am Radkranz 4 befindet sich eine Lauffläche 5, die rechtsseitig in einen Spurkranz 6 übergeht. Das Schienenrad 1 ist damit zum Abrollen auf einer Schiene ausgebildet und kann Bestandteil des Fahrwerkes eines Schienenfahrzeugs sein. Das Schienenrad 1 ist dabei mit Reibringkörpern 10 versehen, und es werden nicht dargestellte Reibklötze vorgesehen, die mit den Reibringkörpern10 zum Bremsen des Schienenrades 1 außenseitig in Kontakt gebracht werden.

Die Reibringkörper 10 sind um die Achse des Schienenrades 1 ringförmig umlaufend ausgestaltet und derart dimensioniert, dass die Reibringkörper 10 im radial sich erstreckenden Bereich zwischen der Radnabe 3 und dem Radkranz 4 am Radsteg 2 angeordnet werden können. Die Reibringkörper 10 weisen Reibringe 11 auf, gegen die die Bremsklötze (nicht dargestellt) der Schienenradbremse 100 angepresst werden können. Weiterhin umfassen die Reibringkörper 10 Anbindungskörper 12 und 13, und die Anbindungskörper 12 und 13 sind auf der inneren Oberfläche 14 der Reibringe 11, die in Richtung zum Radsteg 2 weist und die gegenüberliegende Oberfläche der Reibfläche der Reibringe 11 bildet, angeordnet.

Die Anbindungskörper 12 sind als Kühlkörper 12 ausgestaltet und ragen in den Lüftungsspalt 26 hinein, ohne die Oberfläche des Radsteges 2 zu berühren. Die Kühlkörper 12 sind dabei lamellenartig ausgeführt und sind auf der Oberfläche 14 der Reibringe 12 stoffschlüssig angebunden.

Die Anbindungskörper 13 bilden Verbindungskörper 13, die zwischen der Oberfläche 14 der Reibringe 11 und der Oberfläche des Radsteges 2 einsitzen. Dabei sind die Verbindungskörper 13 in eine Vertiefung 27 in der Oberfläche 14 der Reibringe 11 flächig aufgesetzt oder formschlüssig eingesetzt und können in dieser ferner stoffschlüssig mit den Reibringen 11 verbunden sein.

Die Reibringe 11 und die Anbindungskörper 12 und 13 sind jeweils aus Flachmetallmaterial ausgeschnitten, beispielsweise durch ein Laserstrahlschneidverfahren, einem Wasserstrahlschneidverfahren oder durch ein thermisches Trennverfahren.

Durch den Radsteg 2 erstreckt sich ein Schraubelement 16 hindurch, das in Aufnahmevertiefungen in den Verbindungskörpern 13 einsitzt und die Verbindungskörper 13 auf beiden Seiten des Radsteges 2 miteinander verbindet. Durch die mit dem Schraubelement 16 gebildete Verbindung sind die Reibringkörper 10 formschlüssig am Radsteg 2 des Schienenrades 1 gehalten.

Auf der rechten Seite des Radsteges 2 ist der Verbindungskörper 13 mit einer Aussparung 18 ausgeführt, die sich in radialer Richtung des Schienenrades 1 erstreckt. In der Aussparung 18 ist ein Führungselement 20 eingebracht, das über eine Spannhülse 21 formschließend mit dem Radsteg 2 verbunden ist. Durch die längs in Radialrichtung sich erstreckende Aussparung 18 kann das Führungselement 20 in der Aussparung 18 abgleiten, um radiale Verlagerungen des Reibringes 11, beispielsweise durch thermische Effekte, ausgleichen zu können, wobei das Führungselement 20 durch die Spannhülse 21 lagefest am Radsteg 2 angeordnet bleibt.

Das Schraubelement 16 weist einen Schraubenschaft 22 auf, der einen kleineren Außendurchmesser aufweist als der Innendurchmesser der Spannhülse 21. Damit entstehen keine Verspannungen bei einer radialen Ausdehnung des Reibringes 11, die eine Drift in der Position des Schraubelementes 16 hervorrufen kann.

Das Führungselement 20 in Anordnung in der Aussparung 18 im Verbindungskörper 13 ist lediglich auf der rechten Seite gezeigt, und über den Umfang des Schienenrades 1 verteilt können mehrere Schraubverbindungen mit dem Schraubelement 16 und der Spannhülse 21 gemeinsam mit dem Führungselement 20 vorgesehen sein. Die Anordnung des Führungselementes 20 und der Spannhülse 21 kann dabei wechselseitig auf der linken und auf der rechten Seite vorgesehen sein.

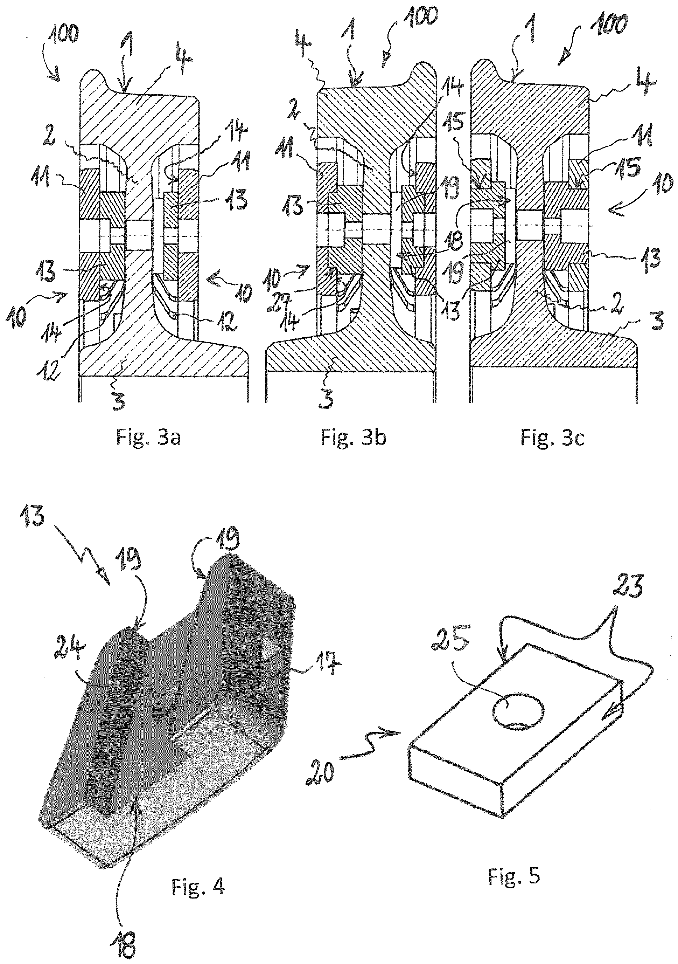

Figur 2 zeigt in einer Explosionsdarstellung die Schienenradbremse 100 mit dem Schienenrad 1, und in einer fliegenden Anordnung sind beabstandet zum Schienenrad 1 die Reibringkörper 10 auf beiden Seiten dargestellt. In der unteren Ansicht des Reibringkörpers 10 sind die Anbindungskörper 12 und 13 sichtbar, die einmal als Kühlkörper 12 und einmal als Verbindungskörper 13 ausgeführt sind. Weiterhin dargestellt sind die Schraubelemente 16, um die Reibringkörper 10 miteinander zu verbinden, und um diese an das Schienenrad 1 anzubinden. Durch die innenseitige Ansicht des unteren Reibringes 11 sind die Verbindungskörper 13 mit den Aussparungen 18 gezeigt, in die die Führungselemente 20 einsitzen können, weiterhin dargestellt sind die Spannhülsen 21, die in Löcher im Radsteg 2 eingesetzt werden können. Zur detaillierteren Ausgestaltung der Reibringkörper 10 sind in den folgenden Figuren 3a, 3b und 3c mehrere Varianten aufgezeigt, wie nachfolgend beschrieben.

Die Figuren 3a, 3b und 3c zeigen jeweils Schienenradbremsen 100 mit einem Schienenrad 1, einem Radsteg 2 in einer radialen Erstreckungsebene zwischen einer Radnabe 3 und einem Radkranz 4. Auf beiden Seiten des Radsteges 2 sind dabei Reibringkörper 10 mit jeweiligen Reibringen 11 und Anbindungskörpern 12 und 13 angeordnet.

Figur 3a zeigt eine Ausführungsvariante, bei dem die Verbindungskörper 13 auf der inneren Oberfläche 14 der Reibringe 11 plan aufgebracht sind. Zur Befestigung der Verbindungskörper 13 können diese auf der Oberfläche 14 stoffschlüssig aufgebracht sein, beispielsweise durch ein Schweißverfahren oder durch ein Lötverfahren. Auf gleiche Weise können die Kühlkörper 12 auf der Oberfläche 14 aufgebracht sein.

Figur 3b zeigt eine Ausführungsvariante zur Verbindung der Verbindungskörper 13 mit den Reibringen 11, wobei auf der Oberfläche 14 Vertiefungen 27 vorgesehen sind, in die die Verbindungskörper 13 eingebracht sind, sodass neben einer nicht näher gezeigten stoffschlüssigen Verbindung zwischen den Verbindungskörpern 13 und den Reibringen 11 ferner ein Formschluss gebildet wird. Auf der rechten Seite des Radsteges 2 ist der Verbindungskörper 13 beispielhaft mit einer Aussparung 18 dargestellt, die durch eine Seitenfläche 19 der Aussparung 18 begrenzt ist, und es ist erkennbar, dass die Aussparung 18 in radialer Richtung zwischen der Radnabe 3 und dem Radkranz 4 verläuft.

Figur 3c zeigt schließlich eine Ausführungsvariante zur Bildung einer Verbindung zwischen dem Verbindungskörper 13 und dem Reibring 11, in der in den Reibringen 11 Löcher 15 eingebracht sind, durch die sich die Verbindungskörper 13 hindurch erstrecken und mit der äußeren Oberfläche der Reibringe 11 bündig abschließen. Dadurch entsteht neben der nicht gezeigten stoffschlüssigen Verbindung ebenfalls eine formschlüssige Verbindung zwischen dem Verbindungskörper 13 und den Reibringen 11. Das Beispiel zeigt eine Aussparung 18 mit einer Seitenfläche 19 auf der linken Seite des Radsteges 2, während der Verbindungskörper 13 auf der rechten Seite die Aussparung nicht zeigt.

Figur 4 zeigt eine perspektivische Ansicht eines Verbindungskörpers 13 mit einer Aussparung 18, die durch zwei Seitenflächen 19 seitlich begrenzt ist, und in die Aussparung 18 kann ein Führungselement 20 gemäß Figur 5 eingesetzt werden. Der Verbindungskörper 13 weist eine Schraubdurchführung 24 auf, und das Führungselement 20 weist eine Bohrung 25 zur Aufnahme der Spannhülse 21 auf, wobei der Innendurchmesser der Spannhülse 21 einen größeren Durchmesser aufweist als der Schraubenschaft 22 des Schraubelementes 16, siehe hierzu Figur 1. Die Schraubdurchführung 24 im Verbindungskörper 13 kann dabei eine Passung bilden mit endseitigen Durchmesserbereichen des Schraubelementes 16, sodass eine radiale Bewegung des Schraubelementes 16 relativ zum Verbindungskörper 13 verhindert ist.

Zum Abgleiten des Führungselementes 20 in der Aussparung 18 im Verbindungskörper 13 ist das Führungselement 20 durch seitliche Führungsflächen 23 begrenzt, die auf den Seitenflächen 19 der Aussparung 18 im Verbindungskörper 13 abgleiten.

Die Erfindung beschränkt sich in ihrer Ausführung nicht auf das vorstehend angegebene bevorzugte Ausführungsbeispiel. Vielmehr ist eine Anzahl von Varianten denkbar, welche von der dargestellten Lösung auch bei grundsätzlich anders gearteten Ausführungen Gebrauch macht. Sämtliche aus den Ansprüchen, der Beschreibung oder den Zeichnungen hervorgehenden Merkmale und/oder Vorteile, einschließlich konstruktiven Einzelheiten, räumliche Anordnungen und Verfahrensschritte, können sowohl für sich als auch in den verschiedensten Kombinationen erfindungswesentlich sein.

### Bezugszeichenliste

- 100: Schienenradbremse

- 1: Schienenrad
- 2: Radsteg
- 3: Radnabe
- 4: Radkranz
- 5: Lauffläche
- 6: Spurkranz

- 10: Reibringkörper
- 11: Reibring
- 12: Anbindungskörper, Kühlkörper
- 13: Anbindungskörper, Verbindungskörper
- 14: Oberfläche
- 15: Loch
- 16: Schraubelement
- 17: Aussparung
- 18: Aussparung
- 19: Seitenfläche
- 20: Führungselement
- 21: Spannhülse
- 22: Schraubenschaft
- 23: Führungsflächen
- 24: Schraubdurchführung
- 25: Bohrung
- 26: Lüftungsspalt
- 27: Vertiefung

## Patentansprüche

1. Reibringkörper (10) zur Anordnung an den Radsteg (2) eines Schienenrades (1) für ein Schienenfahrzeug zur Bildung einer Schienenradbremse (100), **dadurch gekennzeichnet, dass** der Reibringkörper (10) einen aus einem Flachmetallmaterial ausgeschnittenen Reibring (11) und mehrere mittels einer stoffschlüssigen Verbindungstechnik an den Reibring (11) angeordnete Anbindungskörper (12, 13) aufweist.

2. Reibringkörper (10) nach Anspruch 1, **dadurch gekennzeichnet, dass** der Reibring (11) aus einem Flachstahlmaterial oder aus einem Flachaluminiummaterial ausgeschnitten ist.

3. Reibringkörper (10) nach Anspruch 1 oder 2, **dadurch gekennzeichnet, dass** die Anbindungskörper (12) Kühlkörper (12) bilden, durch die bei Anordnung des Reibringkörpers (10) an den Radsteg (2) ein Kühlluftstrom zwischen dem Reibring (11) und dem Radsteg (2) ausbildbar ist.

4. Reibringkörper (10) nach einem der Ansprüche 1 bis 3, **dadurch gekennzeichnet, dass** die Anbindungskörper (13) Verbindungskörper (13) bilden, über die der Reibring (11) an den Radsteg (2) angebunden ist.

5. Reibringkörper (10) nach einem der vorgenannten Ansprüche, **dadurch gekennzeichnet, dass** die stoffschlüssige Verbindung zwischen den Anbindungskörpern (12, 13) und dem Reibring (11) eine Lötverbindung oder eine Schweißverbindung aufweist.

6. Reibringkörper (10) nach einem der vorgenannten Ansprüche, **dadurch gekennzeichnet, dass** die Anbindungskörper (12, 13) aus einem Flachmetallmaterial, insbesondere aus einem Flachstahlmaterial oder aus einem Flachaluminiummaterial, ausgeschnitten sind.

7. Reibringkörper (10) nach einem der vorgenannten Ansprüche, **dadurch gekennzeichnet, dass** der Reibring (11) und/oder die Anbindungskörper (12, 13) mittels einem Laserstrahlschneidverfahren, einem Wasserstrahlschneidverfahren oder einem thermischen Trennverfahren aus einem Blechmaterial ausgeschnitten sind.

8. Reibringkörper (10) nach einem der vorgenannten Ansprüche, **dadurch gekennzeichnet, dass** die Anbindungskörper (12, 13) auf einer planen Oberfläche (14) des Reibringes (11) aufgesetzt sind oder dass die Anbindungskörper (12, 13) in Löcher (15) im Reibring (11) wenigstens teilweise hineingeführt sind.

9. Reibringkörper (10) nach einem der vorgenannten Ansprüche, **dadurch gekennzeichnet, dass** die Anbindungskörper (13) eine vorzugsweise tangentiale, kanalförmige Aussparung (17) aufweisen, die mittels Luftströmung eine Konvektionskühlung des Anbindungskörpers (13) ermöglicht.

10. Reibringkörper (10) nach einem der vorgenannten Ansprüche, **dadurch gekennzeichnet, dass** die Anbindungskörper (13) eine Aussparung (18) mit radial verlaufenden, insbesondere planparallelen Seitenflächen (19) aufweisen.

11. Reibringkörper (10) nach Anspruch 10, **dadurch gekennzeichnet, dass** Führungselemente (20) vorgesehen sind, die vorzugsweise mittels Spannhülsen (21) am Schienenrad (1) formschlüssig gehalten sind und die in den radialen Aussparungen (18) der Anbindungskörper (13) gleitend geführt sind.

12. Schienenradbremse (100) mit einem Schienenrad (1), aufweisend eine Radnabe (3) und ein Radkranz (4) mit einer Lauffläche (5), wobei sich zwischen der Radnabe (3) und dem Radkranz (4) ein Radsteg (2) erstreckt, und wobei an beiden Seiten des Radsteges (2) Reibringkörper (10) am Radsteg (2) angeordnet sind, **dadurch gekennzeichnet, dass** die Reibringkörper (10) jeweils einen aus einem Flachmetallmaterial ausgeschnittenen Reibring (11) und mehrere mittels einer stoffschlüssigen Verbindungstechnik an den Reibring (11) angeordnete Anbindungskörper (12, 13) aufweisen.

13. Schienenradbremse (100) nach Anspruch 12, **dadurch gekennzeichnet, dass** Schraubelemente (16) vorgesehen sind, mit denen die Reibringe (11) auf beiden Seiten des Radsteges (2) miteinander verspannt sind und wobei wenigstens die Verbindungskörper (13) im Spannverband mit den Schraubelementen (16) angeordnet sind.

14. Schienenradbremse (100) nach Anspruch 13, **dadurch gekennzeichnet, dass** die Schraubelemente (16) durch die Spannhülsen (21) hindurchgeführt sind, wobei die Schraubelemente (16) einen Schraubenschaft (22) aufweisen, der im Durchtrittsbereich durch die Spannhülse (21) einen kleineren Durchmesser aufweist als der Innendurchmesser der Spannhülse (21).

15. Schienenradbremse (100) nach einem der Ansprüche 12 bis 14 mit einem Reibringkörper (10) nach einem der Ansprüche 2 bis 11.

## Claims

1. Friction ring body (10) for arrangement at the wheel web (2) of a rail wheel (1) for a rail vehicle for forming a rail wheel brake (100), **characterized in that** the friction ring body (10) comprises a friction ring (11) cut out of a flat metal material and several connection bodies (12, 13) arranged at the friction ring (11) by means of a firm bonding technology.

2. Friction ring body (10) according to claim 1, **characterized in that** the friction ring (11) is cut out of a flat steel material or of a flat aluminum material.

3. Friction ring body (10) according to claim 1 or 2, **characterized in that** the connection bodies (12) form cooling elements (12), by which a cooling air flow between the friction ring (11) and the wheel web (2) can be formed when the friction ring body (10) is arranged at the wheel web (2).

4. Friction ring body (10) according to one of claims 1 to 3, **characterized in that** the connection bodies (13) form connecting bodies (13), via which the friction ring (11) is connected to the wheel web (2).

5. Friction ring body (10) according to any one of the preceding claims, **characterized in that** the firm bonding between the connection bodies (12, 13) and the friction ring (11) has a soldered joint or a welded joint.

6. Friction ring body (10) according to any one of the preceding claims, **characterized in that** the connection bodies (12, 13) are cut out of a flat metal material, in particular of a flat steel material or of a flat aluminum material.

7. Friction ring body (10) according to any one of the preceding claims, **characterized in that** the friction ring (11) and / or the connection bodies (12, 13) are cut out of a sheet metal material by means of a laser beam cutting method, a water jet cutting method or a thermal separation method.

8. Friction ring body (10) according to any one of the preceding claims, **characterized in that** the connection bodies (12, 13) are placed on a flat surface (14) of the friction ring (11) or that the connection bodies (12, 13) are at least partially inserted into holes (15) in the friction ring (11).

9. Friction ring body (10) according to any one of the preceding claims, **characterized in that** the connection bodies (13) comprise a preferably tangential, canal-shaped cavity (17) which allows convection cooling of the connection body (13) by means of air flow.

10. Friction ring body (10) according to any one of the preceding claims, **characterized in that** the connection bodies (13) comprise a cavity (18) having radial, in particular plane-parallel, side surfaces (19).

11. Friction ring body (10) according to claim 10, **characterized in that** guide elements (20) are provided, which are preferably positively locked on the rail wheel (1) by means of clamping sleeves (21) and are glidingly guided in the radial cavities (18) of the connection bodies (13).

12. Rail wheel brake (100) with a rail wheel (1), comprising a wheel hub (3) and a wheel rim (4) with a running surface (5), wherein a wheel web (2) extends between the wheel hub (3) and the wheel rim (4), and wherein friction ring bodies (10) are arranged at the wheel web (2) on both sides of the wheel web (2), **characterized in that** the friction ring bodies (10) each comprise a friction ring (11) cut out of a flat metal material and several connection bodies (12, 13) arranged at the friction ring (11) by means of a firm bonding technology.

13. Rail wheel brake (100) according to claim 12, **characterized in that** screw elements (16) are provided, with which the friction rings (11) are clamped to each other on both sides of the wheel web (2) and wherein at least the connecting bodies (13) are arranged in the clamping structure with the screw elements (16).

14. Rail wheel brake (100) according to claim 13, **characterized in that** the screw elements (16) are passed through the clamping sleeves (21), wherein the screw elements (16) comprise a screw shaft (22), which in the passage area through the clamping sleeve (21) has a smaller diameter than the inner diameter of the clamping sleeve (21).

15. Rail wheel brake (100) according to one of claims 12 to 14 with a friction ring body (10) according to one of claims 2 to 11.

## Revendications

1. Corps de bague de friction (10) pour mise en place sur l'âme de la roue (2) d'une roue ferroviaire (1) pour un véhicule sur rail pour former un frein de roue ferroviaire (100), **caractérisé en ce que** le corps de bague de friction (10) comporte une bague de friction (11) découpée à partir d'un matériau de métal plat et plusieurs corps de liaison (12,13) disposés sur la bague de friction (11) au moyen d'une technique de liaison par conformité de matière.

2. Corps de bague de friction (10) selon la revendication 1, **caractérisé en ce que** la bague de friction (11) est découpée à partir d'un matériau d'acier plat ou à partir d'un matériau d'aluminium plat.

3. Corps de bague de friction (10) selon la revendication 1 ou 2, **caractérisé en ce que** les corps de liaison (12) forment des corps de refroidissement (12) par lesquels un flux de refroidissement peut être constitué entre la bague de friction (11) et l'âme de la roue (2) lors de la mise en place du corps de bague de friction (10) sur l'âme de la roue (2).

4. Corps de bague de friction (10) selon l'une quelconque des revendications 1 à 3, **caractérisé en ce que** les corps de liaison (13) forment des corps de raccordement (13) par le biais desquels la bague de friction (11) est reliée à l'âme de la roue (2).

5. Corps de bague de friction (10) selon l'une quelconque des revendications précédentes, **caractérisé en ce que** la liaison par conformité de matière entre les corps de liaison (12,13) et la bague de friction (11) comporte une liaison par brasage ou une liaison par soudage.

6. Corps de bague de friction (10) selon l'une quelconque des revendications précédentes, **caractérisé en ce que** les corps de liaison (12,13) sont découpés à partir d'un matériau métallique plat, notamment à partir d'un matériau d'acier plat ou d'un matériau d'aluminium plat.

7. Corps de bague de friction (10) selon l'une quelconque des revendications précédentes, **caractérisé en ce que** la bague de friction (11) et/ou les corps de liaison (12,13) sont découpés à partir d'un matériau de tôle au moyen d'un procédé de découpe au laser, d'un procédé de découpe par jet d'eau ou d'un procédé de séparation thermique.

8. Corps de bague de friction (10) selon l'une quelconque des revendications précédentes, **caractérisé en ce que** les corps de liaison (12,13) sont posés sur une surface plane (14) de la bague de friction (11) ou **en ce que** les corps de liaison (12,13) sont introduits, au moins en partie, dans des trous (15) dans la bague de friction (11).

9. Corps de bague de friction (10) selon l'une quelconque des revendications précédentes, **caractérisé en ce que** les corps de liaison (13) comportent de préférence un évidement (17) tangentiel, en forme de conduit, qui permet un refroidissement par convexion du corps de liaison (13) au moyen d'un flux d'air.

10. Corps de bague de friction (10) selon l'une quelconque des revendications précédentes, **caractérisé en ce que** les corps de liaison (13) comportent un évidement (18) avec des faces latérales (19) passant radialement, notamment dans un plan parallèle.

11. Corps de bague de friction (10) selon la revendication 10, **caractérisé en ce que** des éléments de guidage (20) sont prévus qui sont maintenus par conformité de forme de préférence au moyen de manchons de serrage (21) sur la roue ferroviaire (1) et qui sont guidés en coulissement dans les évidements radiaux (18) des corps de liaison (13).

12. Frein de roue ferroviaire (100) avec une roue ferroviaire (1), comportant un moyeu (3) et une jante (4) avec une surface de roulement (5), une âme de roue (2) s'étendant entre le moyeu (3) et la jante (4) et sur les deux côtés de l'âme de la roue (2) des corps de bague de friction (10) étant disposés sur l'âme de la roue (2) **caractérisé en ce que** les corps de bague de friction (10) comportent respectivement une bague de friction (11) découpée à partir d'un matériau métallique plat et plusieurs corps de liaison (12,13) disposés sur la bague de friction (11) au moyen d'une technique de liaison par conformité de matière.

13. Frein de roue ferroviaire (100) selon la revendication 12, **caractérisé en ce que** des éléments de vissage (16) sont prévus avec lesquels les bagues de friction (11) sont serrées l'une à l'autre sur les deux côtés de l'âme de roue (2) et au moins les corps de liaison (13) étant disposés en ensemble de serrage avec les éléments de vissage (16).

14. Frein de roue ferroviaire (100) selon la revendication 13, **caractérisé en ce que** les éléments de vissage (16) sont passés à travers les manchons de serrage (21), les éléments de vissage (16) comportant une tige de vis (22), qui comporte dans la zone de passage à travers le manchon de serrage (21) un diamètre plus petit que le diamètre intérieur du manchon de serrage (21).

15. Frein de roue ferroviaire (100) selon l'une quelconque des revendications 12 à 14 avec un corps de bague de friction (10) selon l'une quelconque des revendications 2 à 11.
